# EUROPEAN PATENT SPECIFICATION

(11) **EP 1 725 998 B1**
(45) Date of publication and mention of the grant of the patent: **04.03.2009**
(21) Application number: 04719687.8
(22) Date of filing: 11.03.2004
(51) Int. Cl.: G08B 15/00, H04N 7/18

(54) **TRANSMITTER AND RECEIVER FOR A SURVEILLANCE SYSTEM**
SENDER UND EMPFÄNGER FÜR EIN ÜBERWACHUNGSSYSTEM
EMETTEUR ET RECEPTEUR POUR UN SYSTEME DE SURVEILLANCE

(43) Date of publication of application: 29.11.2006
(73) Proprietor: Ultrawaves design holding B. V., 3544 WB Utrecht (NL)
(72) Inventor: STEENSMA, Johannes, Satellite Beach, FL 32937 (US); BLOEMENDAAL, Mark, NL-3544 WB Utrecht (NL)
(74) Representative: van Westenbrugge, Andries
(86) International application number: PCT/NL2004/000177
(87) International publication number: WO 2005/088572

(56) References cited:
- EP-A- 0 986 259
- GB-A- 2 322 509
- US-A- 5 325 449

## Description

### Field of the invention

The present invention relates to a transmitter for transmission of data, such as video surveillance data, via a transmission channel, such as a wireless transmission channel. The transmitter is arranged for receiving a data stream from a data source and comprises processing means and local storage means connected to the processing means, the processing means being connected to a bandwidth detector which is arranged for detecting a momentary available bandwidth of the transmission channel, the processing means being arranged for selecting and directly transmitting a first part of the data stream corresponding to the detected available bandwidth. The present invention further relates to a receiver for receiving the data stream via the transmission channel, the receiver comprising receiver processing means and receiver storage means connected to the receiver processing means. The present invention further relates to a surveillance system comprising at least one transmitter according to the present invention and at least one receiver according to the present invention.

### Background of the invention

US patent application publication US-A1-2001/0056579 describes such a transmission system used in a security system. This document describes a surveillance video camera system which comprises at least one video camera unit which includes a sensor for detecting either sound or movement, a traffic detector for detecting a traffic amount of the network and a memory for storing video data. In the case a sound or movement is detected and the measured traffic amount exceeds a pre-determined reference level, only a portion of the surveillance data (for example only the sound) is transmitted to the display terminal or the data storing terminal. As a result, if an alarm occurs during a period with a traffic amount above the reference level, video and/or sound data of important events might be lost.

### Summary of the invention

It is an object of the present invention to provide (parts of) a surveillance system which is robust and reliable. The system should ensure that all source data is eventually stored for later analysis or review. Also, the system should be able to provide a basic real-time surveillance level, even in the case of communication channel deterioration.

According to the present invention, a transmitter is provided according to the preamble of claim 1 as defined above, in which the processing means are further arranged to store a second part of the data stream in the local storage means, the second part being formed by the remaining data from the data stream, and to retrieve and transmit the second part of the data stream at a later moment in time when sufficient bandwidth of the transmission channel is available.

This allows to obtain the complete original data stream afterwards when all data has been transmitted from the transmitter. This may be advantageous especially in surveillance applications, where the recorded data stream may be used later for further analysis or evidence.

In an embodiment of the present invention, the data stream is a video data stream, and the first part of the data stream is a video stream having frames with a lower image quality than an image quality of the data stream from the data source. By using a lower image quality, less bits are transmitted which may fit the actual available bandwidth of the transmission channel, but nevertheless, the stream of images still provides a sufficient scenery overview for surveillance purposes. The required bandwidth may be reduced with a factor of 1 - 100. It is particularly advantageous when the video data stream comprises JPEG coded images (e.g. JPEG2000), and the first part of data stream comprises one or more levels of JPEG coded images. JPEG coding provides layers of compression coding, and allows to benefit from the layered quality of images. Even the lowest layer of images provides a full scenery overview, and each additional layer improves the quality of the scenery over view.

In a further embodiment, the data stream is a video data stream, and the first part of the data stream is a video stream having a lower frame rate than the frame rate of the data stream from the data source. This also allows to transmit full scenery over view in a surveillance application, albeit at a lower image frequency. The required bandwidth may be reduced by a factor of 1 - 40, and in combination with the image quality downscaling, a possible bandwidth reduction factor between 1- 4000 may be achieved, allowing a very good resistance against transmission channel bandwidth disruption or variation.

The processing means are, in a further embodiment, arranged to multiplex a current data stream from the data source with the retrieved second part of the data stream. This way, the locally stored data is added to the live data stream when the available bandwidth of the transmission channel allows, resulting in a normal full quality surveillance once enough bandwidth is available.

According to a further aspect of the invention, there is provided a receiver according to the preamble of claim 6, in which the receiver processing means are arranged for storing a first part of the data stream as transmitted over the transmission channel by the transmitter, in the receiver storage means, and upon reception of a second part of the data stream, retrieving the first part of the data stream from the receiver storage means, merging the first part and second part to obtain the data stream, and storing the data stream.

This receiver embodiment advantageously co-operates with a transmitter according to the present invention. When insufficient bandwidth is available on the transmission channel, the transmitter will send less data, which the receiver stores. Once the transmission channel bandwidth allows to send more data, the received (historical) data is merged with the already stored data, resulting in the full original data stream to be stored in the receiver storage means. The full data stream can be used for further analysis afterwards or be used as evidence.

In a further embodiment, the receiver further comprises a display connected to the receiver processing means, the receiver processing means further being arranged for displaying the first part of the data stream upon reception. This allows to use the received data stream for real-time surveillance, even in the case of a lower than normal available bandwidth of the transmission channel.

The receiver processing means may in a further embodiment be arranged for communicating an available transmission bandwidth signal to the bandwidth detector of the transmitter. The available bandwidth on the transmission channel may e.g. be determined from the received data stream (bit error rate, received signal strength, signal to noise ratio, etc.). It may be transmitted from the receiver to the transmitter using the same transmission channel, or a separate transmission or control channel.

According to a further aspect of the invention, there is provided a surveillance system according to the preamble of claim 9, comprising at least one transmitter and at least one receiver according to the present invention. This allows to monitor multiple surveillance sites at a building or closed off premises at a single receiver station, or at multiple receiver stations. The receiver station may be a fixed site, or a mobile site, e.g. a guard vehicle.

In a further embodiment, the surveillance system further comprises a central controller, the central controller being arranged for controlling the available bandwidth of the transmission channel for each of the at least one transmitter. This allows to provide the surveillance system with a flexible mode of operation, in which individual surveillance sites may be given different priority, different methods of data degradation for each transmitter, etc. E.g. an entrance gate surveillance site may be given higher priority than a rooftop surveillance site, such that the real-time scenery from the entrance gate is of a higher quality than the real-time scenery from the rooftop in degraded bandwidth situations.

Finally, the present invention relates to a method for transmitting a stream of data from at least one data source to a data destination by means of a transmission channel using a nominal bandwidth, the method comprising determining the instantly available bandwidth of the transmission channel, when the instantly available bandwidth is smaller than the nominal bandwidth dividing the stream of data in a first part and a second part, the first part having a required bandwidth below the determined instantly available bandwidth, and transmitting the first part over the transmission channel and storing the first part at the data destination storing the second part at the at least one data source, and, when the instantly available bandwidth is larger than the nominal bandwidth, retrieving the second part, transmitting the second part over the transmission channel and at the data destination, retrieving the first part for merging the first part and second part to obtain the original data stream.

The present method provides advantages analogue to the advantages of the surveillance system, transmitter and receiver embodiments as described above. The stream of data may in an embodiment of the present method, be a video data stream, and the first part of the data stream is a video stream having frames with a lower image quality than an image quality of the data stream from the data source. The video data stream may comprise JPEG coded images (such as JPEG2000), and the first part of data stream then comprises one or more levels of JPEG coded images. In a further embodiment, the data stream is a video data stream, and the first part of the data stream is a video stream having a lower frame rate than the frame rate of the data stream from the data source. The method may comprise multiplexing a current data stream from the data source with the retrieved second part of the data stream. Also, the method may further comprise displaying the first part of the data stream upon reception.

### Brief description of the drawings

Embodiments of the invention will now be described, by way of example only, with reference to the accompanying schematic drawings in which corresponding reference symbols indicate corresponding parts, and in which:
Figure 1 shows a schematic diagram of the transmitter according to an embodiment of the present invention.
Figure 2 shows a schematic diagram of the receiver according to an embodiment of the present invention.
Figure 3 shows a schematic diagram of the surveillance system according to an embodiment of the present invention.
Figure 4 shows a schematic diagram of the surveillance system and a mobile inspection unit according to an embodiment of the present invention.

### Detailed description of the preferred embodiments

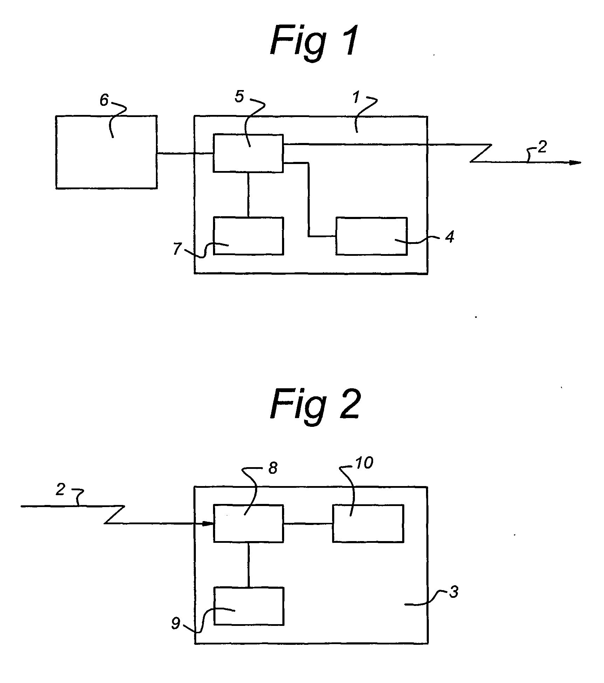

Figure 1 schematically depicts a proposed transmitter 1. In the normal mode of operation, the transmitter 1 transmits a data stream comprising e.g. digital surveillance data from a surveillance site 6 via a transmission channel 2 to a remote monitoring site at a nominal bandwidth. The transmitter 1 comprises transmitter processing means 5 which receive the data stream from the surveillance site, and transmit the processed data via the transmission channel 2. Furthermore, the transmitter 1 comprises storage means 7 connected to the processing means 5 for storing and retrieving data. The transmitter processing means 5 may e.g. comprise digital processing circuits, analogue processing circuits or a combination of both. The storage means 7 may comprise any type of mass data storage, such as, but not limited to, magnetic or optical disc storage, or electronic components, such as RAM, PROM, etc. Also, the transmitter 1 comprises a bandwidth detector 4 which provides the instantaneous bandwidth available on the transmission channel 2. The transmitter 1 may further comprise other components which are arranged to perform other transmitter type of functions, such as RF signal processing, however, these are not considered important for detailed discussion of the present invention.

The surveillance site 6 may comprise a known surveillance camera (possibly with audio capability), which outputs a stream of digital data. The transmission channel 2 could be, for example, air (in case of a wireless link) or an optical transmission fiber. The data stream comprises, for example, image and audio data that is captured by the surveillance camera at the surveillance site 6, and control information, which enables monitoring and configuration of the transmission system. The control information is added by the transmitter processing means 5 to the data stream.

In case of a bandwidth constraint, due to e.g. unlawful events or radio interference, the bandwidth detector 4 detects that the momentary bandwidth of the transmission channel 2 is reduced so that its bandwidth is insufficient to transport all of the surveillance data from the surveillance site 6. In this constrained mode of operation, the transmitter processing means 5 are arranged to provide the surveillance data at a reduced resolution and/or frame rate according to the constrained bandwidth to the transmitter 1 and store the remainder of the surveillance data at the local storage medium 7. In a recovery mode of operation, i.e. after the bandwidth of the transmission channel recovers from the temporary constraint, the transmitter processing means 5 retrieve the previously stored data from the local storage means 7, multiplex it with the surveillance data from the surveillance site 6 and transmit both to the transmission channel 2.

Figure 2 shows a schematic diagram of a receiver 3 co-operating with the transmitter 1. The receiver 3 may be positioned remote from the transmitter 1 at a distance depending on the transmitter 1 and the receiver 3 capabilities. The receiver 3 comprises receiver processing means 8 and a local storage medium 9, for example a hard disk drive or a semiconductor memory, such as RAM (Random Access Memory). In the normal mode of operation, the receiver processing means 8 receive the data stream from the transmitter 1 and store it in the local storage medium 9 from where it can be retrieved immediately for real-time viewing or at a later time to view a recorded event. In case of the constrained bandwidth, the receiver processing means 8 receive the data stream from the transmitter 1 at the reduced frame rate and/or resolution, corresponding to the available bandwidth of the transmission channel 2, and store it in the receiver storage means 9. The data can be retrieved immediately for real-time viewing of the reduced quality surveillance data. In the recovery situation, the capacity of the transmission medium 2 is restored, and the receiver 3 receives both the previously captured image data that was stored in the storage memory 7 of the transmitter and the surveillance data from the surveillance site 6. The receiver processing means 8 store the surveillance data in the receiver storage medium and merge the previously captured surveillance data with the corresponding data in the receiver storage means 7 that was stored during the bandwidth constraint. Note that the bandwidth of the point-to-point transmission system in the recovery situation should ideally exceed the nominal signaling bandwidth that is used in the normal situation, to be able to transmit the additional (historical) data.

The bandwidth detector 4 may be implemented as a software network management unit which is present in each of the transmitters 1 and receivers 3 of the surveillance system. Each unit is aware of the bandwidth requirements of the network in the surveillance system and of the bandwidth capabilities of each of the transmission channels 2. When actual available bandwidth is changing due to external or internal events, the software network management unit which detects such a change signals this to the transmitter processing means 5 to revert to the constrained mode of operation (or start the recovery mode or normal operational mode). The change information will ripple through to the other software network management units, thereby possibly resulting in other transmitters 1 to revert to a different operational mode as well.

In an advantageous embodiment of the present invention, the parameters of the surveillance data that are adjusted to accommodate the data stream to the available bandwidth during a temporary constrained bandwidth are controllable by the user. For example, the system could be configured such that in case of a constrained bandwidth, the frame rate is kept constant (e.g. at 5 frames per second) but that the quality of each image (e.g. the resolution) is reduced in order to tailor the data bandwidth to the available bandwidth. The image frames are transported with less quality to the receiver 3. After the bandwidth of the transmission channel 2 is restored, the residual image information is transported and each poor quality image frame is reconstructed to the full quality at the receiver 3. The bit rate of the data transport can be regulated by a factor of up to 100 by using this approach, e.g. when the data stream from the surveillance site 6 comprises, or is processed to comprise, JPEG image data. The known JPEG compression format is an example of a layered compression scheme, in which the quality of the image is enhanced in each layer. When transmitting and displaying only one or more lower levels of the layered data, a complete scenery from the surveillance site 6 can be viewed, all be it at a lower quality image. For data streams comprising video data a preferred embodiment of the present invention works in close cooperation with the JPEG2000 video compression method that may be used for layered compression. The iterative algorithm of JPEG2000 video compression can transmit (and hence store the residue) of an image in different qualities as part of its iterative compression method.

Another example of reducing the bit rate is to reduce the frame rate but maintain the quality of each image frame. By using this method the bit rate can be reduced by, for example, a factor of 5 by reducing the frame rate from 5 to 1 frames per second, resulting in the storage of 80% of the data in the transmitter storage medium 7. Again, the complete scenery from the surveillance site 6 can be monitored, but with less temporal resolution (less frames per second). The residual 80% is transmitted after the bandwidth of the transmission channel is restored. The stored data consists of, for example, the image frames 1, 2, 3, 4, 6, 7, 8, 9, 11, 12, 13, 14, ..., etc. while the transmitted data comprises frames 0, 5, 10, 15,.., etc. After a bandwidth recovery, these former frames are inserted in the already transported data stream at the receiver end to produce the complete data stream with the original quality. Obviously, both mechanisms can be combined offering a wide range of required transmission bandwidth and possibility to restore the original quality of the surveillance data after recovery of the bandwidth.

In a further embodiment of the invention, the transmission channel 2 is shared by multiple data streams which each can be adjusted in terms of capacity. For example, the frame rate, resolution, or both can be adjusted by the aforementioned mechanism. For example, six data streams with captured video images taken from: a fence, an entrance, a parking lot, a rooftop etc, can be adjusted according to pre-determined priority levels based on the importance of each of the data streams. For each stream a definition or 'compaction profile' can be pre-defined in the system dependent on the characteristics and importance of each stream. When e.g. all mentioned surveillance sites 6 transmit their data to a single receiver 3, the receiver processing means 8 may be arranged to control all surveillance sites 6, either using the same transmission channel 2, or a different communication channel. For example in case of a constrained bandwidth, the rooftop stream could be reduced by a factor of 1000 (frame rate and quality combined) while the entrance video stream only by a factor of 4 (quality only) related to the importance that is connected to observing the entrance gate (not missing any happening events).

In a further embodiment of the present invention, the data stream transmitted from the transmitter processing means 5 comprise a payload section with the surveillance data, for example, sound and image data captured by a camera in the surveillance site 6, and a substantially smaller overhead section, which may be used for network management and for example fixed identifiers for determining the quality, for example in terms of the BER (Bit Error Rate) of the transmission channel 2.

In a further embodiment of the present invention several transmitter-receiver pairs could be cascaded in order to be able to bridge a certain transmission distance between the surveillance site and the remote monitoring site. In this exemplary embodiment, the intermediate transmitters 1 and receivers 3 would be connected back-to-back. The similar mechanism can be valid in this type of configuration and the definition/control is maintained throughout the whole system of cascaded transmitter-receiver pairs.

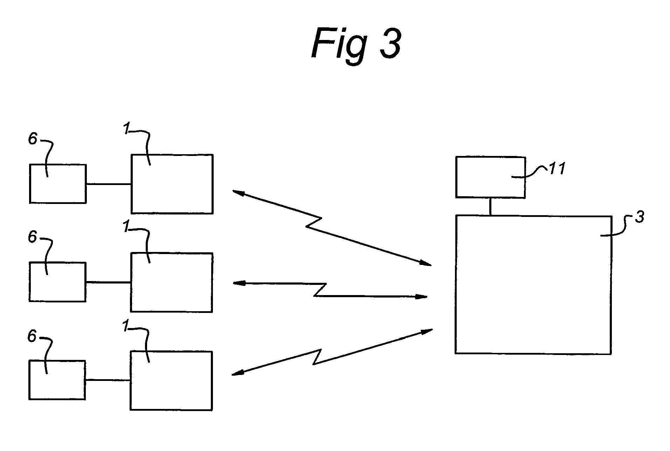

Figure 3 schematically shows an exemplary embodiment of a surveillance system according to the present invention comprising several transmitters 1 and a single receiver 3 in a star configuration. In this configuration, the data streams from the surveillance sites 6 to the receiver 3 could be managed utilizing time division multiplexing, in which transmission time slots are dedicated to the different transmitters 1. The time slots may be synchronized so that the packets from the transmitters 1 do not interfere with each other at the receiver 3. The receiver processing means 8 (see Fig. 2) could be designed to manage the different elements of the surveillance system and e.g. provide an interface to facilitate operations and management of the surveillance system. In a further embodiment of the present invention, a central controller 11 designed for managing the surveillance system e.g. setting the priority levels of the different data streams, assigning the time slots for the different transmitters, software upgrades, encoding of the data streams etc. could be used for managing the surveillance system. Note that the aforementioned data processing modes (i.e. normal, constrained and recovery mode) may be applied for the data stream between each of the transmitters 1 and the receiver 3. The tailoring of the data stream from the different transmitters 1 to the available momentary bandwidth can be done by regulating the resolution of the image frames or the image frame rate or a combination of both. Furthermore, priority levels that determine the importance of, e.g., different sets of data streams (e.g. from fence, roof, door etc.) within the data stream from one single transmitter 1 but also of the different data streams from the transmitters 1 could be assigned and used by the transmitter processing means 5 to decide which data stream to store in the transmitter storage memory 7 and/or regulate (in terms of e.g. image frame rate or frame resolution) in case of a temporary constrained bandwidth.

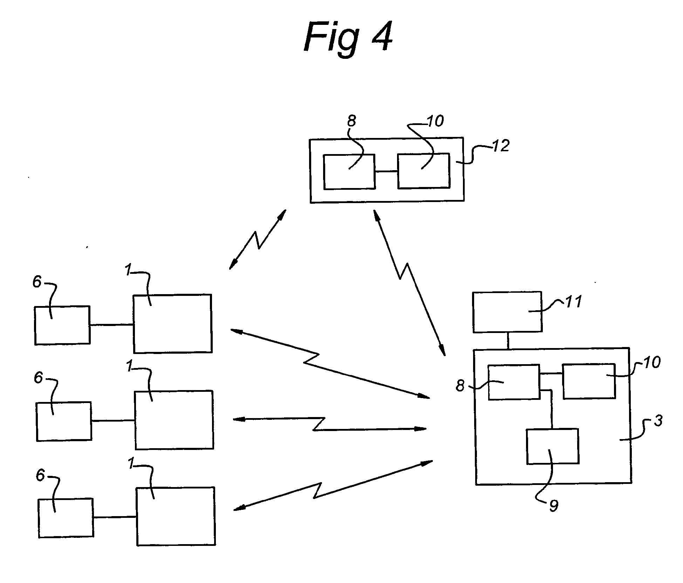

Figure 4 schematically shows a further exemplary embodiment of the present invention comprising a mobile unit 12, e.g. a car. The mobile unit 12 comprises processing means 8 and a display 10 for receiving and inspecting the data streams from the transmitters 1. According to the three modes in the aforementioned mechanism, the data streams from the transmitters 1 could comprise the full frame rate and resolution data from the surveillance sites 6 as well as a portion of previously captured data from the storage memory 7 (i.e. recovery mode), full frame rate and/or resolution data from the surveillance sites 6 (i.e. normal mode) or the reduced frame rate and/or frame resolution data from the surveillance sites 6 (i.e. constrained mode). This embodiment allows a guard to drive to a building under surveillance, and monitor various cameras in the building before entering the building.

In a further embodiment of the present invention, the static receiver 3 inside a building is arranged to transmit recorded data (historical video streams) to the mobile unit 12. This may e.g. be implemented with a transmitter 1 according to the present invention.

While specific embodiments of the invention have been described above, it will be appreciated that the invention may be practiced otherwise than as described. The embodiments described above are exemplary embodiments of the invention and not intended to limit the scope of the invention, which is defined in the appended claims.

## Claims

1. Transmitter (1) for transmission of data via a transmission channel (2), the transmitter (1) being arranged for receiving a data stream from a data source (6) and comprising processing means (5) and local storage means (7) connected to the processing means (5),
the processing means (5) being connected to a bandwidth detector (4) which is arranged for detecting a momentary available bandwidth of the transmission channel (2), the processing means (5) being arranged for selecting and directly transmitting a first part of the data stream corresponding to the detected available bandwidth,
**characterised in that**
the processing means (5) are further arranged to store a second part of the data stream in the local storage means (7), the second part being formed by the remaining data from the data stream, and to retrieve and transmit the second part of the data stream at a later moment in time when sufficient bandwidth of the transmission channel (2) is available.

2. Transmitter (1) according to claim 1, in which the data stream is a video data stream, and the first part of the data stream is a video stream having frames with a lower image quality than an image quality of the data stream from the data source (6).

3. Transmitter (1) according to claim 2, in which the video data stream comprises JPEG coded images, and the first part of data stream comprises one or more levels of JPEG coded images.

4. Transmitter (1) according to one of the claims 1 through 3, in which the data stream is a video data stream, and the first part of the data stream is a video stream having a lower frame rate than the frame rate of the data stream from the data source (6).

5. Transmitter (1) according to one of the proceeding claims, in which the processing means (5) are arranged to multiplex a current data stream from the data source (6) with the retrieved second part of the data stream.

6. Receiver (3) for receiving a data stream via a transmission channel (2), the receiver (3) comprising receiver processing means (8) and receiver storage means (9) connected to the receiver processing means (8),
**characterised in that**
the receiver processing means (8) are arranged for storing a first part of the data stream as transmitted over the transmission channel (2) by a transmitter (1) according to one of the claims 1 through 5, in the receiver storage means (9), and
upon reception of a second part of the data stream, retrieving the first part of the data stream from the receiver storage means (9), merging the first part and second part to obtain the data stream, and storing the data stream.

7. Receiver (3) according to claim 6, further comprising a display (10) connected to the receiver processing means (8), the receiver processing means (8) further being arranged for displaying the first part of the data stream upon reception.

8. Receiver (3) according to claim 6 or 7, the receiver processing means (8) being arranged for communicating an available transmission bandwidth signal to the bandwidth detector (4) of the transmitter (1).

9. Surveillance system comprising at least one transmitter (1) according to one of the claims 1 through 5, and at least one receiver (3) according to one of the claims 6 through 8.

10. Surveillance system according to claim 9, in which the surveillance system further comprises a central controller (11), the central controller (11) being arranged for controlling the available bandwidth of the transmission channel (2) for each of the at least one transmitter (1).

11. Method for transmitting a stream of data from at least one data source to a data destination by means of a transmission channel using a nominal bandwidth, the method comprising:
- determining the instantly available bandwidth of the transmission channel;
- when the instantly available bandwidth is smaller than the nominal bandwidth:
- dividing the stream of data in a first part and a second part, the first part having a required bandwidth below the determined instantly available bandwidth, and
- transmitting the first part over the transmission channel and storing the first part at the data destination;
- storing the second part at the at least one data source; and
- when the instantly available bandwidth is larger than the nominal bandwidth:
- retrieving the second part;
- transmitting the second part over the transmission channel;
- at the data destination, retrieving the first part for merging the first part and second part to obtain the original data stream.

12. Method according to claim 11, in which the stream of data is a video data stream, and the first part of the data stream is a video stream having frames with a lower image quality than an image quality of the data stream from the data source.

13. Method according to claim 12, in which the video data stream comprises JPEG coded images, and the first part of data stream comprises one or more levels of JPEG coded images

14. Method according to one of the claims 11 through 13, in which the data stream is a video data stream, and the first part of the data stream is a video stream having a lower frame rate than the frame rate of the data stream from the data source.

15. Method according to one of the claims 11-14, further comprising multiplexing a current data stream from the data source with the retrieved second part of the data stream.

16. Method according to one of the claims 11-15, further comprising displaying the first part of the data stream upon reception.

## Patentansprüche

1. Übertrager (1) zur Übertragung von Daten über einen Übertragungskanal (2),
der Übertrager (1) ist zum Empfangen eines Datenstroms von einer Datenquelle (6) ausgebildet und umfasst Bearbeitungsmittel (5) und mit den Bearbeitungsmitteln (5) verbundene lokale Speichermittel (7),
die Bearbeitungsmittel (5) sind mit einem Bandbreitendetektor (4) verbunden, der zum Detektieren einer momentan verfügbaren Bandbreite des Übertragungskanals (2) ausgebildet ist, wobei die Bearbeitungsmittel (5) zum Auswählen und direkten Übertragen eines ersten Teils des Datenstroms entsprechend der detektierten verfügbaren Bandbreite eingerichtet sind,
**dadurch gekennzeichnet, dass**
die Bearbeitungsmittel (5) weiter zum Speichern eines zweiten Teils des Datenstroms in den lokalen Speichermitteln (7) eingerichtet sind, wobei der zweite Teil durch die verbleibenden Daten des Datenstroms gebildet wird, und wobei die Bearbeitungsmittel zum Abrufen und Übertragen des zweiten Teils des Datenstroms zu einem späteren Zeitpunkt eingerichtet sind, wenn ausreichend Bandbreite des Übertragungskanals (2) verfügbar ist.

2. Übertrager (1) nach Anspruch 1, wobei der Datenstrom ein Videodatenstrom ist, und der erste Teil des Datenstroms ein Videostrom mit Frames mit einer niedrigeren Bildqualität als eine Bildqualität des Datenstroms von der Datenquelle (6) ist.

3. Übertrager (1) nach Anspruch 2, wobei der Videodatenstrom JPEG-kodierte Bilder umfasst, und der erste Teil des Datenstroms ein oder mehrere Level von JPEG-kodierten Bildern umfasst.

4. Übertrager (1) nach einem der Ansprüche 1 bis 3, wobei der Datenstrom ein Videodatenstrom ist, und der erste Teil des Datenstroms ein Videostrom mit einer niedrigeren Frame-Rate als die Frame-Rate des Datenstroms von der Datenquelle (6) ist.

5. Übertrager (1) nach einem der voranstehenden Ansprüche, wobei die Bearbeitungsmittel (5) zum Multiplexen eines aktuellen Datenstroms von der Datenquelle (6) mit dem abgerufenen zweiten Teil des Datenstroms eingerichtet sind.

6. Empfänger (3) zum Empfangen eines Datenstroms über einen Übertragungskanal (2), der Empfänger (3) umfasst Empfängerbearbeitungsmittel (8) und mit den Empfängerbearbeitungsmitteln (8) verbundene Empfängerspeichermittel (9),
**dadurch gekennzeichnet, dass**
die Empfängerbearbeitungsmittel (8) zum Speichern eines ersten Teils des Datenstroms, wie er über den Übertragungskanal (2) durch einen Übertrager (1) gemäß einem der Ansprüche 1 bis 5 übertragen wurde, in den Empfängerspeichermitteln (9), und
bei Empfang eines zweiten Teils des Datenstroms zum Abrufen des ersten Teils des Datenstroms aus den Empfängerspeichermitteln (9), Vereinen des ersten Teils und des zweiten Teils zum Erhalten des Datenstroms und Speichern des Datenstroms eingerichtet sind.

7. Empfänger (3) nach Anspruch 6, weiter umfassend eine mit den Empfängerbearbeitungsmitteln (8) verbundene Anzeige (10), wobei die Empfängerbearbeitungsmittel (8) weiter zum Anzeigen des ersten Teils des Datenstroms beim Empfang eingerichtet sind.

8. Empfänger (3) nach Anspruch 6 oder 7, wobei die Empfängerbearbeitungsmittel (8) zum Kommunizieren eines verfügbaren Übertragungsbandbreitensignals an den Bandbreitendetektor (4) des Übertragers (1) eingerichtet sind.

9. Überwachungssystem umfassend mindestens einen Übertrager (1) nach einem der Ansprüche 1 bis 5 und mindestens einen Empfänger (3) nach einem der Ansprüche 6 bis 8.

10. Überwachungssystem nach Anspruch 9, wobei das Überwachungssystem weiter einen zentralen Controller (11) umfasst, wobei der zentrale Controller (11) zum Kontrollieren der verfügbaren Bandbreite des Übertragungskanals (2) für jeden der mindestens einen Übertrager (1) eingerichtet ist.

11. Verfahren zum Übertragen eines Datenstroms von mindestens einer Datenquelle zu einem Datenziel mittels eines Übertragungskanals unter Verwendung einer nominalen Bandbreite, das Verfahren umfasst:
- Bestimmen der augenblicklich verfügbaren Bandbreite des Übertragungskanals;
- wenn die augenblicklich verfügbare Bandbreite kleiner als die nominale Bandbreite ist:
- Aufteilen des Datenstroms in einen ersten Teil und einen zweiten Teil, wobei der erste Teil eine benötigte Bandbreite unterhalb der bestimmten augenblicklich verfügbaren Bandbreite hat, und
- Übertragen des ersten Teils über den Übertragungskanal und Speichern des ersten Teils am Datenziel:
- Speichern des zweiten Teils bei der mindestens einen Datenquelle; und
- wenn die augenblicklich verfügbare Bandbreite größer als die nominale Bandbreite ist:
- Abrufen des zweiten Teils;
- Übertragen des zweiten Teils über den Übertragungskanal;
- Abrufen des ersten Teils beim Datenziel zum Vereinigen des ersten Teils und des zweiten Teils zum Erhalten des originalen Datenstroms.

12. Verfahren nach Anspruch 11, wobei der Datenstrom ein Videodatenstrom ist, und der erste Teil des Datenstroms ein Videostrom mit Frames mit einer niedrigeren Bildqualität als eine Bildqualität des Datenstroms von der Datenquelle (6) ist.

13. Verfahren nach Anspruch 12, wobei der Videodatenstrom JPEG-kodierte Bilder umfasst, und der erste Teil des Datenstroms ein oder mehrere Level von JPEG-kodierten Bildern umfasst.

14. Verfahren nach einem der Ansprüche 11 bis 13, wobei der Datenstrom ein Videodatenstrom ist, und der erste Teil des Datenstroms ein Videostrom mit einer niedrigeren Frame-Rate als die Frame-Rate des Datenstroms von der Datenquelle (6) ist.

15. Verfahren nach einem der Ansprüche 11 bis 14, weiter umfassend das Multiplexen eines aktuellen Datenstroms von der Datenquelle mit dem abgerufenen zweiten Teil des Datenstroms.

16. Verfahren nach einem der Ansprüche 11 bis 15, weiter umfassend das Anzeigen der ersten Teils des Datenstroms beim Empfang.

## Revendications

1. Emetteur (1) pour transmettre des données via un canal de transmission (2), l'émetteur (1) étant disposé pour recevoir un flux de données à partir d'une source de données (6) et comprenant des moyens de traitement (5) et un moyen de stockage local (7) raccordé aux moyens de traitement (5),
les moyens de traitement (5) étant raccordés à un détecteur de bande passante (4) qui est disposé pour détecter une bande passante disponible momentanément du canal de transmission (2), les moyens de traitement (5) étant disposés pour sélectionner et transmettre directement une première partie du flux de données correspondant à la bande passante disponible détectée,
**caractérisé en ce que**
les moyens de traitement (5) sont en outre disposés pour stocker une seconde partie du flux de données dans le moyen de stockage local (7), la seconde partie étant formée par les données restantes à partir du flux de données, et pour récupérer et transmettre la seconde partie du flux de données à un moment ultérieur en temps lorsqu'une bande passante suffisante du canal de transmission (2) est disponible.

2. Emetteur (1) selon la revendication 1, dans lequel le flux de données est un flux de données vidéo, et la première partie du flux de données est un flux vidéo ayant des trames avec une qualité d'image inférieure à la qualité d'image du flux de données à partir de la source de données (6).

3. Emetteur (1) selon la revendication 2, dans lequel le flux de données vidéo comprend des images codées JPEG, et la première partie du flux de données comprend un ou plusieurs niveaux d'images codées JPEG.

4. Emetteur (1) selon l'une des revendications 1 à 3, dans lequel le flux de données est un flux de données vidéo, et la première partie du flux de données est un flux vidéo ayant un taux de trame inférieur au taux de trame du flux de données à partir de la source de données (6).

5. Emetteur (1) selon l'une quelconque des revendications précédentes, dans lequel les moyens de traitement (5) sont disposés pour multiplexer un flux de données actuel à partir de la source de données (6) avec la seconde partie récupérée du flux de données.

6. Récepteur (3) pour recevoir un flux de données via un canal (2), le récepteur (3) comprenant des moyens de traitement de récepteur (8) et des moyens de stockage de récepteur (9) raccordés aux moyens de traitement de récepteur (8),
**caractérisé en ce que**
les moyens de traitement de récepteur (8) sont disposés pour stocker une première partie du flux de données comme émis sur le canal de transmission (2) par un émetteur (1) selon l'une des revendications 1 à 5, dans le moyen de stockage de récepteur (9), et
lors de la réception d'une seconde partie du flux de données, récupération de la première partie du flux de données à partir du moyen de stockage de récepteur (9), fusion de la première partie et de la seconde partie pour obtenir le flux de données, et stockage du flux de données.

7. Récepteur (3) selon la revendication 6, comprenant en outre un affichage (10) raccordé aux moyens de traitement de récepteur (8), les moyens de traitement de récepteur (8) étant en outre disposés pour afficher la première partie du flux de données lors de la réception.

8. Récepteur (3) selon la revendication 6 ou 7, le moyen de traitement de récepteur (8) étant disposé pour communiquer un signal de bande passante de transmission disponible au détecteur de bande passante (4) de l'émetteur (1).

9. Système de surveillance comprenant au moins un émetteur (1) selon l'une des revendications 1 à 5 et au moins un récepteur (3) selon l'une des revendications 6 à 8.

10. Système de surveillance selon la revendication 9, dans lequel le système de surveillance comprend en outre un dispositif de commande central (11), le dispositif de commande central (11) étant disposé pour commander la bande passante disponible du canal de transmission (2) pour chacun d'au moins un émetteur (1).

11. Procédé pour transmettre un flux de données à partir d'au moins une source de données à une destination de données au moyen d'un canal de transmission utilisant une bande passante nominale, le procédé comprenant :
- la détermination de la bande passante disponible instantanément du canal d'émission ;
- lorsque la bande passante disponible instantanément est plus petite que la bande passante nominale :
- la division du flux de données en une première partie et en une seconde partie, la première partie ayant une bande passante requise inférieure à la bande passante instantanément disponible et déterminée, et
- la transmission de la première partie sur le canal de transmission et stockage de la première partie à la destination de données ;
- le stockage de la seconde partie à au moins une source de données ; et
- lorsque la bande passante disponible instantanément est plus grande que la bande passante nominale :
- la récupération de la seconde partie ;
- la transmission de la seconde partie sur le canal de transmission ;
- à la destination de données, la récupération de la première partie pour fusion de la première partie et de la seconde partie pour obtenir le flux de données original.

12. Procédé selon la revendication 11, dans lequel le flux de données est un flux de données vidéo, et la première partie du flux de données est un flux vidéo ayant des trames avec une qualité d'image inférieure à une qualité d'image du flux de données à partir de la source de données.

13. Procédé selon la revendication 12, dans lequel le flux de données vidéo comprend des images codées JPEG, et la première partie du flux de données comprend un ou plusieurs niveaux d'images codées JPEG.

14. Procédé selon l'une quelconque des revendications 11 à 13, dans lequel le flux de données est un flux de données vidéo, et la première partie du flux de données est un flux vidéo ayant un taux de trame inférieur au taux de trame du flux de données à partir de la source de données.

15. Procédé selon l'une quelconque des revendications 11 à 14, comprenant en outre le multiplexage d'un flux de données actuel à partir de la source de données avec la seconde partie récupérée du flux de données.

16. Procédé selon l'une quelconque des revendications 11 à 15, comprenant en outre l'affichage de la première partie du flux de données lors de la réception.
